Europäisches Patentamt

European Patent Office

Office européen des brevets

(19)

Publication number: **0 274 635**
A1

# EUROPEAN PATENT APPLICATION

(21) Application number: 87117610.3

(22) Date of filing: 27.11.87

(51) Int. Cl.⁴ **H02K 11/00** , H01G 1/03

(30) Priority: 11.12.86 IT 2398186 U

(43) Date of publication of application:
20.07.88 Bulletin 88/29

(84) Designated Contracting States:
DE FR GB

(71) Applicant: GRUPPO INDUSTRIALE ERCOLE
MARELLI S.p.A.
Viale Edison, 130
I-20099 Sesto S. Giovanni (MI)(IT)

(72) Inventor: Vezzoli, Vittore
Via Trento 1
I-20064 Gorgonzola (MI)(IT)

(74) Representative: Forattini, Amelia et al
c/o Internazionale Brevetti Ingg. ZINI,
MARANESI & C. S.r.l. Piazza Castello 1
I-20121 Milano(IT)

(54) Device for fixing a capacitor to the outer casing of a single phase asynchronous motor.

(57) The device comprises a clip constituted by a substantially C-shaped lamination (4), formed by two elastic elements (5, 6) in the shape of a segment of circular cylinder arranged coaxial and substantially diametrally counterposed, so as to delimit a recess for the accommodation of the capacitor (16), and by an elastic base element (7) which connects the two cylinder segments (5, 6) to one another. The clip (4) is fixed to a part of the outer casing of the motor by means of two fixing elements respectively constituted by a substantially rectangular cutout (10) provided in the elastic base element (7) and by a tab in the shape of a button having a substantially rectangular head (2) provided on the motor and having such dimensions as to pass through the cutout (10) in the base lamination (7), the coupling between the two fixing elements being obtained by moving the clip perpendicular to the plane of its elastic base elements (7), and by subsequent rotation.

Fig.1a

Fig.1b

EP 0 274 635 A1

# DEVICE FOR FIXING A CAPACITOR TO THE OUTER CASING OF A SINGLE-PHASE ASYNCHRONOUS MOTOR

The present invention relates to a device for fixing the capacitor of a single-phase asynchronous motor to the respective casing or terminal box.

The capacitor of a single-phase asynchronous motor is, among the active parts of the motor, notoriously one of the components which is most subject to deterioration in the course of time. It is therefore convenient that the fixing system of said capacitor, besides complying with criteria of constructive simplicity and economy, also allow its easy and rapid replacement. It is furthermore advantageous that the assembly of the fixing system itself on the motor be rapid and easy and executable with minimum effort.

In addition to the above, it is furthermore convenient, in order to limit the frequency of replacement of the capacitor, that the fixing device be such as to limit the transmission to the capacitor of the heat generated by the motor itself, which can affect the life of the capacitor, especially if it is of the electrolytic type, and to facilitate the natural convective cooling motions.

Among the various solutions adopted by the prior art for the fixing of the capacitor to the motor, some use bands which embrace the body of the capacitor and are screwed onto the casing; others provide a raised assembly by means of a threaded tang; still others use an elastic clip formed by a lamination folded substantially in the shape of a C (similar to that employed for the mounting of fuses or of other tubular electrical or electronic components) the base whereof is screwed to the casing of the motor or is inserted by translatory motion parallel to itself in a recess provided in the casing. Finally, other solutions provide the containment of the capacitor in a box adjacent to the casing.

The above described solutions of the prior art do not fully satisfy, or only partially satisfy, the previously described requirements, both due to the uselessly high number of parts to be assembled or to the undesirably long assembly time, or to the hardly negligible effort required by the assembly operation itself, and due to the excessive closeness of the capacitor to the casing, which is undesirable from the thermal point of view as mentioned above.

An object of the present invention is therefore to provide a device for fixing the capacitor to the terminal box of a single-phase asynchronous motor which has a modest cost and allows an extremely easy and rapid assembly, with the application of a minimal fixing force, though ensuring the required locking.

Another object of the present invention is to provide a fixing device which avoids the direct contact of the casing of the capacitor with the terminal box and with other parts of the motor casing.

This aim, as well as these objects, are achieved according to the present invention by means of a device for fixing a capacitor to the outer casing of a single-phase asynchronous motor, comprising a clip constituted by a substantially C-shaped lamination, formed by two elastic elements in the shape of a segment of circular cylinder arranged coaxial and substantially diametrally counterposed, so as to delimit a recess for the accommodation of the capacitor, and by an elastic base element which connects the two cylinder segments to one another, characterized in that said clip is fixed to a part of the outer casing of the motor by means of two fixing elements respectively constituted by a substantially rectangular cutout provided in the elastic base element and by a tab in the shape of a button having a substantially rectangular head provided on the motor and having such dimensions as to pass through the cutout in the base lamination, the coupling between the two fixing elements being obtained by moving the clip perpendicular to the plane of its elastic base element, and by subsequent rotation.

Conveniently, the fixing device is characterized in that the edge of the longer sides of the cutout is curved, with the convexity facing towards the inside of the clip, so that the most protruding part of the convexity of the edge approaches the inner surface of the rectangular head of the tab until it locks it by friction when the clip, after the movement perpendicular to the plane of its elastic base element, with the major axis of the cutout orientated parallel to that of the rectangular head, so as to allow the cutout to pass through the tab, is rotated so as to orientate said major axis of the cutout at approximately 90° with respect to that of the rectangular head.

The invention will become apparent from the following description of an embodiment thereof, given with reference to the accompanying drawings, wherein:

figure 1a is a schematic perspective view of a terminal box whereto is applied one of the elements of the fixing device according to the present invention;

figure 1b is a schematic perspective view of the elastic clip supporting the other element of the fixing device according to the present invention;

figures 2 and 3 are schematic perspective views of the terminal box with the clip arranged adjacent, located respectively in the first assembly position and in the second position, or final position;

figure 4 is a lateral detail view, in partial cross section, of the arrangement of the capacitor on the terminal box according to the present invention.

In figure 1a, the reference numeral 1 indicates a terminal box, mounted on the casing of the motor (not shown), 2 indicates a tab with a rectangular head constituting one of the elements of the coupling according to the present invention, and 3 indicates the major axis of the rectangular head.

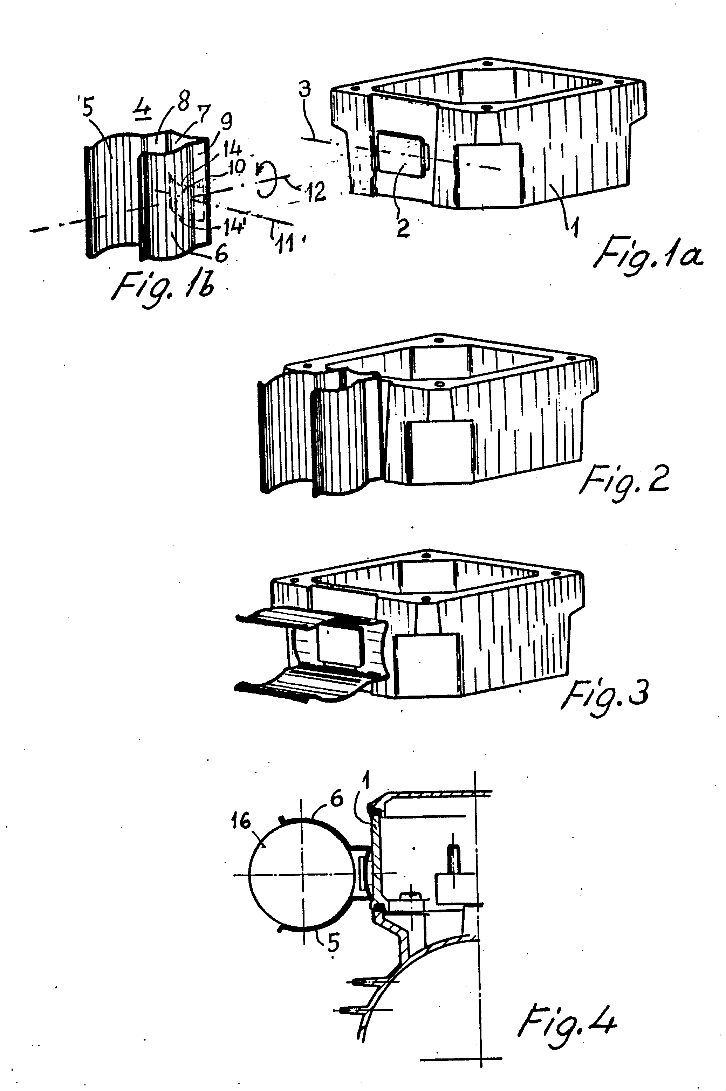

In figure 1b, 4 generally indicates a substantially C-shaped elastic lamination clip according to the present invention. Said clip comprises two elastic elements 5, 6 substantially in the shape of a circular cylinder, arranged coaxial and diametrally opposite so as to delimit a recess for the accommodation of the capacitor having a substantially cylindrical container, not shown, which can be introduced from the open end of the clip by virtue of the elastic yielding of two lamination elements 5, 6 as is well known.

The two elements in the shape of a segment of cylinder 5, 6 are connected, on the side opposite to the cutout, to an elastic base element 7, which in the illustrated example is supposed monolithic with the cylinder segments 5, 6 and is connected thereto by two portions of lamination 8, 9. According to the present invention, a rectangular cutout 10, shown in broken lines in figure 1b, is provided in the base element 7. The numeral 11 indicates the major axis of the cutout 10, and 12 indicates the barycentric axis of the clip, perpendicular to the base lamination.

The base element is deformated so that the edges 14, 14' of the longer sides of the cutout are curved towards the inside of the clip.

In figure 1a and in the following figures, for the sake of greater clarity, this deformation or folding of the base element is shown extended up to the edge of the element, but this is not strictly necessary for the embodiment of the present invention.

The described fixing device is mounted by moving the elastic clip 4, perpendicular to its plane and orientated with the axis 11 of the cutout 10 parallel to the axis 3 of the head of the tab 2, towards the tab 2 itself until its head passes through the cutout 10 (fig. 2). Subsequently the clip 4 is rotated about its barycentric axis 12, perpendicular to the base lamination 7, in the direction of the arrow 13 or in the opposite direction, until the axis 11 is orientated approximately at 90o with respect to the axis 3, that is to say as illustrated in figure 3. By doing this, the base of the clip locks by friction between the head 2 and the terminal box 1, due to the fact that the edges 14, 14' of the cutout are moved towards the inside of the clip in the direction of the axis 12.

The assembly operation, besides being simple and straightforward, furthermore requires on the part of the operator a minimal effort, which can be further reduced if desired by inserting the capacitor in the clip before its assembly onto the terminal box, this increasing the lever arm of the locking torque.

By virtue of the fact that the element of the coupling connected to the terminal box protrudes therefrom, the fixing device according to the present invention allows to arrange the capacitor not directly adjacent to the terminal box or to any other surface of the motor casing, but slightly spaced, as illustrated in figure 4, so as to reduce the transmission of heat by conduction and facilitate the convective cooling motions. An appropriate dimensioning of the connecting portions 8, 9 of the clip also contributes to said spacing.

In the lateral detail view, in partial cross section, of figure 3, the capacitor is indicated by 1, and the other elements have the same reference numerals as in the previous figures.

## Claims

1. Device for fixing a capacitor to a single-phase asynchronous motor, comprising a clip constituted by a substantially C-shaped lamination (4), formed by two elastic elements (5, 6) in the shape of a segment of circular cylinder arranged coaxial and substantially diametrally counterposed, so as to delimit a recess for the accommodation of the capacitor (16), and by an elastic base element (7) which connects the two cylinder segments (5, 6) to one another, characterized in that said clip (4) is fixed to a part of the outer casing of the motor by means of two fixing elements respectively constituted by a substantially rectangular cutout (10) provided in the elastic base element (7) and by a tab in the shape of a button having a substantially rectangular head (2) provided on the motor and having such dimensions as to pass through the cutout (10) in the base lamination (7), the coupling between the two fixing elements being obtained by moving the clip perpendicular to the plane of its elastic base element (7), and by subsequent rotation.

2. Fixing device according to claim 1, characterized in that the edge of the longer sides (14, 14') of the cutout (10) is curved, with its convexity facing towards the inside of the clip, so that the most protruding part of the convexity of the edge approaches the inner surface of the rectangular head (2) of the tab until it locks it by friction when the clip (4), after the movement perpendicular to the plane of its elastic base element, with the major axis (11) of the cutout (10) orientated parallel to that (3) of the rectangular head, so as to allow the cutout (10) to pass through the tab (2), is rotated so as to orientate said major axis (11) of the cutout at approximately 90o with respect to that (3) of the rectangular head.

3. Device according to claim 2, characterized in that the tab (2) projects from the surface of the motor casing.

Fig.1a

Fig.1b

Fig.2

Fig.3

Fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DD-A- 129 837 (VEB KOMBINAT)<br>* claim 1; figures 1-3 *<br>--- | 1 | H 02 K 11/00<br>H 01 G 1/03 |
| Y | DE-B-2 914 431 (UNIVERSA HEIZUNGSSYSTEME)<br>* column 4, lines 63-66; figures 1-3 *<br>--- | 1 | |
| A | DE-A-2 619 702 (HILTI AG)<br>* page 8, lines 19-21; figure 2 *<br>--- | 2 | |
| A | GB-A- 627 408 (JENKINS)<br>* page 1, lines 12-16, 62-80; figures 1-2 *<br>--- | 1 | |
| A | PATENT ABSTRACTS OF JAPAN, vol. 1, no. 76 (E-77), 21st July 1977, page 11416 E 77; & JP - A - 52 140 813 (HITACHI) 24-11-1977<br>----- | 1 | |

TECHNICAL FIELDS
SEARCHED (Int. Cl.4)

H 02 K 11/00
H 02 K 17/00
H 02 K 15/00
H 01 G 1/00
H 05 K 7/00
H 05 K 5/00
H 02 G 3/00

The present search report has been drawn up for all claims

| Place of search | Date of completion of the search | Examiner |
|---|---|---|
| BERLIN | 24-03-1988 | LEOUFFRE M. |

EPO FORM 1503 03.82 (P0401)